# EUROPEAN PATENT APPLICATION

(11) **EP 4 803 814 A1**
(43) Date of publication of application: **09.09.2026**
(21) Application number: 24887594.0
(22) Date of filing: 29.08.2024
(51) Int. Cl.: F24F 1/32, F16L 5/10

(54) **SEALING STRUCTURE AND AIR CONDITIONER**

(30) Priority: 09.11.2023 CN 202323060279 U; 29.05.2024 CN 202421205355 U
(71) Applicant: Wuhu Maty Air-Conditioning Equipment Co., Ltd., Wuhu, Anhui 241000 (CN); GD Midea Air-Conditioning Equipment Co., Ltd., Foshan, Guangdong 528311 (CN)
(72) Inventor: WANG, Yu, Wuhu, Anhui 241000 (CN); LU, Shaozhang, Wuhu, Anhui 241000 (CN); ZHAO, Eli, Wuhu, Anhui 241000 (CN)
(74) Representative: Ran, Handong
(86) International application number: PCT/CN2024/115584
(87) International publication number: WO 2025/097975

(57) **Abstract**

A sealing structure (100) and an air conditioner. The sealing structure (100) is used for an air conditioner. The air conditioner comprises an air conditioner outdoor unit (200), an air conditioner indoor unit, and a flexible connection member connecting the air conditioner outdoor unit (200) and the air conditioner indoor unit. The flexible connection member comprises a sleeve (210) and a flexible refrigerant pipe provided in the sleeve (210); and a casing of the air conditioner outdoor unit (200) or the air conditioner indoor unit is provided with a mounting hole (220) for the sleeve (210) to pass through. The sealing structure (100) comprises: a sealing and fixing structure, arranged around the periphery of the flexible connection member; and a mounting structure, the periphery of the mounting structure being fixed to the edge of the mounting hole (220), and the inside of the mounting structure allowing the flexible connection member to pass through.

## Description

### CROSS-REFERENCE TO RELATED APPLICATIONS

The present application claims priority to Chinese Patent Application No. 202421205355.X, filed on May 29, 2024, and Chinese Patent Application No. 202323060279.6, filed on November 9, 2023, the entire contents of which are incorporated herein by reference.

### TECHNICAL FIELD

The present application relates to the technical field of air conditioners, and in particular to a seal structure and an air conditioner.

### BACKGROUND

A refrigerant pipe, a drain pipe, an electrical wire, and the like are often connected between an indoor unit and an outdoor unit of an air conditioner. To facilitate installation, the refrigerant pipe, the drain pipe, and the electrical wire are often sleeved together by a bundled pipe as one assembly. A housing of the indoor unit and a housing of the outdoor unit are often each provided with an installation hole through which the bundled pipe passes. However, such a structure often impairs the sealing performance of the housing of the indoor unit and the housing of the outdoor unit, such that dust, mosquitoes, insects and the like can easily enter the interior of the indoor unit and the outdoor unit through a gap between the installation hole and the bundled pipe. In addition, when the bundled pipe twists, the gap between the pipe and a sealing sleeve increases. In particular, for the outdoor unit, since it is installed outdoors, the sealing requirements for dustproofing, waterproofing, rodent prevention and insect prevention are higher. In the related art, the seal structure used is often a seal ring or the like provided at an inner peripheral edge of the installation hole, resulting in a poor sealing effect and difficulty in meeting sealing requirements.

### SUMMARY

A main purpose of the present application is to provide a seal structure, to improve sealing performance of the air conditioner.

To achieve the above objective, the present application provides a seal structure, applied to an air conditioner. The air conditioner includes: an outdoor unit, an indoor unit, and a flexible connection member connecting the outdoor unit and the indoor unit, and a housing of the outdoor unit or the indoor unit is provided with an installation hole for a sleeve pipe to pass through; the seal structure includes: a seal fixing structure surrounding an outer periphery of the flexible connection member; and an installation structure, where an outer periphery of the installation structure is fixed to an edge of the installation hole, and an interior of the installation structure allows the flexible connection member to pass through.

In an embodiment, the flexible connection member includes a sleeve pipe and a flexible refrigerant pipe provided in the sleeve pipe, and the seal fixing structure is a flexible seal sleeve sleeved at the sleeve pipe; the installation structure includes: a first connection portion provided at one end of the sealing sleeve and configured to be sealingly connected to the installation hole; and a second connection portion provided at the other end of the sealing sleeve and configured to be sealingly connected to an outer surface of the sleeve pipe.

In an embodiment, an inner side wall of the second connection portion is provided with a limit protrusion, and the limit protrusion is snap-fitted in the limit groove.

In an embodiment, an end of the limit protrusion away from the inner side wall is provided with an engaging protrusion protruding laterally; when the limit protrusion is snap-fitted into the limit groove, the engaging protrusion is inserted into the sleeve pipe and abutted against an inner wall of the sleeve pipe.

In an embodiment, the flexible seal sleeve and the second connection portion are integrally formed.

In an embodiment, the flexible seal sleeve and the second connection portion are separately formed; one of the second connection portion and the flexible seal sleeve is provided with a seal ring groove, and the other one of the second connection portion and the flexible seal sleeve is provided with an annular seal portion; the annular seal portion is inserted into the seal ring groove.

In an embodiment, the second connection portion includes a first fixing portion and a second fixing portion spliced together, and the limit protrusion is located at a splicing between the first fixing portion and the second fixing portion.

In an embodiment, the first fixing portion is provided with a first through hole, the second fixing portion is provided with a second through hole, and a fastener passes through the first through hole and is fastened to the second through hole to connect the first fixing portion and the second fixing portion.

In an embodiment, an outer edge of the first connection portion is snap-fitted to a peripheral edge of the installation hole, and an inner peripheral edge of the first connection portion allows the sleeve pipe to pass through and is connected to the flexible seal sleeve.

In an embodiment, an end of the flexible seal sleeve away from the second connection portion is annularly provided with a seal flange, and the seal flange is abutted against a side, facing an interior of the housing, of the inner peripheral edge of the first connection portion.

In an embodiment, the first connection portion is inserted into the housing through the insertion opening, and an outer edge of the first connection portion is inserted into the engaging groove.

In an embodiment, the first connection portion is provided with a second engaging portion, and the second engaging portion passes through the engaging hole and engages with an edge of the engaging hole; and
the first connection portion is further provided with a third engaging portion, and the third engaging portion engages with the second engaging portion.

In an embodiment, the second connection portion is provided with an opening away from the flexible seal sleeve, and a seal ring is arranged between an inner wall of the opening and the flexible connection member; and/or
an inner wall of the second connection portion is provided with an arcuate locking portion protruding inwardly.

In an embodiment, the flexible seal sleeve is configured as a corrugated pipe.

In an embodiment, the installation structure is an installation fixing ring, an outer ring of the installation fixing ring is fixed to the edge of the installation hole, and an inner ring of the installation fixing ring allows the flexible connection member to pass through; and the seal fixing structure is annularly provided between the outer periphery of the flexible connection member and the inner ring of the installation fixing ring, so that the flexible connection member is sealingly connected to the installation fixing ring.

In an embodiment, the seal fixing structure includes a seal fixing ring, the seal fixing ring is sealingly sleeved at the flexible connection member, and an outer periphery of the seal fixing ring is fixedly connected to the inner ring of the installation fixing ring.

In an embodiment, the seal fixing structure further includes an installation ring, the installation ring is fixedly sleeved at the seal fixing ring, and the installation ring is detachably mounted to the inner ring of the installation fixing ring.

In an embodiment, the installation ring includes a first connection portion and a second connection portion connected by bending, the first connection portion extends in an axial direction of the installation ring and is snap-fitted to the inner ring of the installation fixing ring, the seal fixing ring is fixed to the first connection portion, and the second connection portion extends in a radial direction of the installation ring and overlaps an outer side of the installation fixing ring.

In an embodiment, a circumferential direction of the installation ring is provided with a snap plate extending in an axial direction of the installation ring, the snap plate is provided with a snap protrusion facing the installation fixing ring, and the snap protrusion is engaged with the inner ring of the installation fixing ring.

In an embodiment, the seal fixing structure is configured as a seal skirt, a first end of the seal skirt is fixed to the flexible connection member, a second end of the seal skirt extends in a direction away from the first end, and an outer diameter of the seal skirt increases in a direction away from the first end; and
the inner ring of the installation fixing ring is clamped to an outer periphery of the second end; or an inner periphery of the second end is pressed against an outer side of the installation fixing ring.

In an embodiment, a plurality of seal skirts are provided, and the plurality of seal skirts are arranged at intervals in an axial direction of the flexible connection member; and two adjacent seal skirts are provided to partially overlap; and/or
the plurality of seal skirts and the flexible connection member are integrally formed.

In an embodiment, one side of the housing is provided with an insertion opening, and an edge of the installation hole is provided with an engaging groove; the installation fixing ring is inserted into the housing through the insertion opening, and an outer edge of the installation fixing ring is inserted into the engaging groove.

In an embodiment, a side of the housing away from the insertion opening is formed with an engaging hole, and an edge of the insertion opening forms a first engaging portion; the installation fixing ring is provided with a second engaging portion, and the second engaging portion passes through the engaging hole and engages with an edge of the engaging hole; and
the installation fixing ring is further provided with a third engaging portion, and the third engaging portion engages with the first engaging portion.

The present application further proposes an air conditioner, including the seal structure as described above.

In the technical solution of the present application, the flexible seal sleeve is sleeved at the flexible connection member. The flexible connection member includes the sleeve pipe and the flexible refrigerant pipe provided in the sleeve pipe, and the housing of the outdoor unit or the indoor unit is provided with the installation hole for the sleeve pipe to pass through to connect the outdoor unit and the indoor unit. One end of the flexible seal sleeve close to the installation hole is provided with the first connection portion to be sealingly connected to the installation hole, to mount one end of the flexible seal sleeve and seal the installation hole. The end of the flexible seal sleeve away from the installation hole is provided with the second connection portion to be sealingly connected to the outer surface of the sleeve pipe, to mount the other end of the flexible seal sleeve and seal the gap between the installation hole and the flexible connection member. Compared with directly providing a seal ring or another seal member on the peripheral edge of the installation hole, in this solution, the seal structure is fixed respectively to the peripheral edge of the installation hole and the outer peripheral edge of the sleeve pipe, thereby ensuring both sealing effect and installation stability. Moreover, when the flexible connection member twists, the flexible seal sleeve can twist therewith, such that the gap between the flexible seal sleeve and the installation hole and the gap between the seal structure and the sleeve pipe do not increase, thereby further ensuring the sealing effect.

### BRIEF DESCRIPTION OF THE DRAWINGS

In order to more clearly illustrate the technical solutions in the embodiments of the present application or in the related art, accompanying drawings required for describing the embodiments or the related art will be briefly introduced below. Apparently, the accompanying drawings described below are merely some embodiments of the present application. For those skilled in the art, other drawings can be obtained based on the structures shown in these drawings without any creative effort.
FIG. 1 is a schematic structural view of an air conditioner according to an embodiment of the present application.
FIG. 2 is an exploded view of the air conditioner in FIG. 1.
FIG. 3 is a side sectional view of the air conditioner in FIG. 1.
FIG. 4 is a schematic view of an installation structure between a second connection portion and a flexible seal sleeve in FIG. 1.
FIG. 5 is a schematic structural view of installation of a seal structure in FIG. 1.
FIG. 6 is a schematic structural view of installation of a first connection portion in FIG. 1.
FIG. 7 is a schematic structural view of the air conditioner according to another embodiment of the present application.
FIG. 8 is an exploded view of the air conditioner in FIG. 7.
FIG. 9 is a side sectional view of the air conditioner in FIG. 7.
FIG. 10 is a schematic structural view of the air conditioner according to an embodiment of the present application.
FIG. 11 is a schematic view of installation of the seal structure mounted on a housing according to an embodiment of the present application, from one angle.
FIG. 12 is a schematic view of the seal structure in FIG. 11 mounted on the housing, from another angle.
FIG. 13 is a schematic view of the seal structure in FIG. 11 mounted on the housing, from yet another angle.
FIG. 14 is a partially enlarged view at portion A in FIG. 13.
FIG. 15 is a schematic structural view of the seal structure in FIG. 11, from one angle.
FIG. 16 is a schematic structural view of the seal structure in FIG. 11, from another angle.
FIG. 17 is a sectional view taken along line A-A of the seal structure in FIG. 16.
FIG. 18 is a schematic structural view of the seal structure according to another embodiment of the present application.
FIG. 19 is a schematic structural view of the seal structure in FIG. 18 in a first sealing state.
FIG. 20 is a sectional view taken along line B-B of the seal structure in FIG. 19.
FIG. 21 is a schematic structural view of the seal structure in FIG. 18 in a second sealing state.
FIG. 22 is a sectional view taken along line C-C of the seal structure in FIG. 21.

Description of reference signs

| reference sign | name | reference sign | name |
|---|---|---|---|
| 100 | seal structure | 133 | seal ring groove |
| 11 | installation fixing ring | 134 | first fixing portion |
| 110 | flexible seal sleeve | 134a | first through hole |
| 111 | annular seal portion | 135 | second fixing portion |
| 112 | seal flange | 135a | second through hole |
| 113 | corrugated pipe | 136 | opening |
| 12 | seal fixing structure | 137 | arcuate locking portion |
| 120 | first connection portion | 138 | reinforcing rib |
| 121 | second engaging portion | 139 | seal ring |
| 121a | seal fixing ring | 200 | outdoor unit |
| 122 | third engaging portion | 201 | housing |
| 122a | installation ring | 202 | upper cover |
| 123 | snap plate | 21 | flexible connection member |
| 123a | snap plate portion | 210 | sleeve pipe |
| 126 | snap protrusion | 211 | limit groove |
| 127 | seal skirt | 220 | installation hole |
| 128 | first end | 230 | insertion opening |
| 129 | second end | 240 | engaging groove |
| 130 | second connection portion | 250 | engaging hole |
| 131 | limit protrusion | 260 | first engaging portion |
| 132 | engaging protrusion | 300 | indoor unit |

The realization of the purpose, functional features, and advantages of the present application will be further described below in conjunction with the embodiments and with reference to the accompanying drawings.

### DETAILED DESCRIPTION OF THE EMBODIMENTS

The technical solutions in the embodiments of the present application will be clearly and completely described below with reference to the accompanying drawings. Apparently, the described embodiments are merely some embodiments of the present application rather than all embodiments. All other embodiments obtained by those skilled in the art based on the embodiments of the present application without inventive effort shall fall within the scope of the present application.

It should be noted that, where directional indications such as up, down, left, right, front, back, etc. are involved in the embodiments of the present application, such directional indications are merely used for explaining relative positional relationships, movement conditions and the like among the components in a particular posture as shown in the drawings. If the particular posture changes, the directional indications change accordingly.

In addition, terms such as "first" and "second" in the embodiments of the present application are merely used for descriptive purposes and shall not be understood as indicating or implying relative importance or implicitly indicating the number of the indicated technical features. Thus, a feature defined with "first" or "second" may explicitly or implicitly include one or more such features. In addition, the term "and/or" throughout the text means that three parallel solutions are included. Taking "A and/or B" as an example, it includes solution A alone, solution B alone, or a solution in which both A and B are satisfied. In addition, the technical solutions of the respective embodiments may be combined with each other, provided that such combinations can be implemented by those skilled in the art. When a combination of technical solutions is contradictory or cannot be implemented, such a combination shall be deemed not to exist and shall not fall within the scope of the present application.

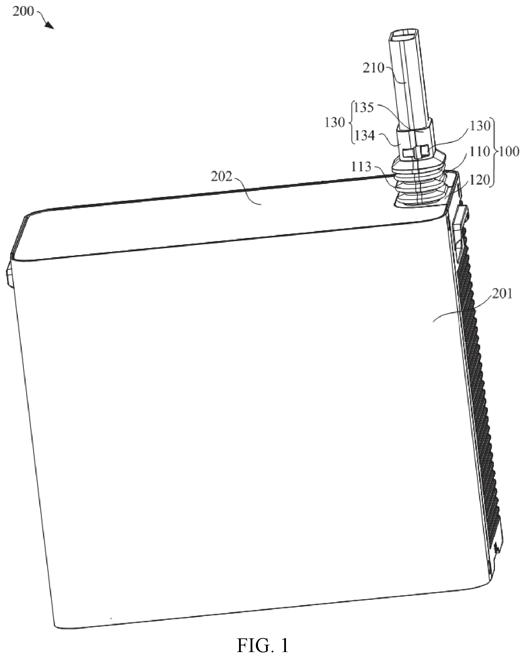

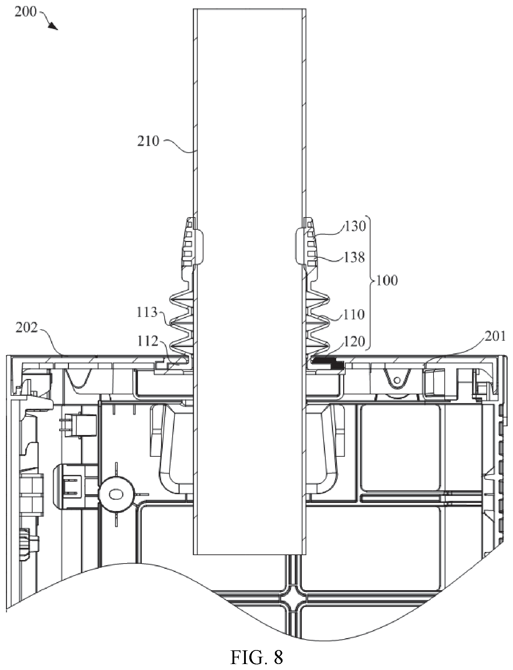

At a first aspect, FIGS. 1 to 9 are schematic views of seal structures and air conditioners according to some embodiments of the present application. In these embodiments, the present application provides a seal structure 100 for an air conditioner. The air conditioner includes an outdoor unit 200, an indoor unit, and a flexible connection member connecting the outdoor unit 200 and the indoor unit. A housing 201 of the outdoor unit 200 or the indoor unit is provided with an installation hole 220 for a sleeve pipe 210 to pass through. The seal structure 100 includes: a seal fixing structure surrounding an outer periphery of the flexible connection member; and an installation structure, an outer periphery of the installation structure is fixed to an edge of the installation hole 220, and an interior of the installation structure allows the flexible connection member to pass through.

In these embodiments of the present application, as shown in FIGS. 1 to 9, the flexible connection member includes a sleeve pipe 210 and a flexible refrigerant pipe provided in the sleeve pipe 210. The seal fixing structure is a flexible seal sleeve 110 sleeved on the sleeve pipe 210. The installation structure includes a first connection portion 120 and a second connection portion 130. The first connection portion 120 is provided at one end of the sealing sleeve and is sealingly connected to the installation hole 220. The second connection portion 130 is provided at the other end of the sealing sleeve and is sealingly connected to an outer surface of the sleeve pipe 210.

Specifically, the air conditioner includes an outdoor unit 200 and an indoor unit. The flexible connection member respectively connects the indoor unit and the outdoor unit 200. The flexible connection member may be a flexible refrigerant pipe and a sleeve pipe 210 sleeving the flexible refrigerant pipe; may also be a drain pipe and a sleeve pipe 210 sleeving the drain pipe; or an electrical wire and a sleeve pipe 210 sleeving the electrical wire. It may also include any two of the refrigerant pipe, the drain pipe, and the electrical wire, together with a bundled pipe simultaneously sleeving the two; or may include the refrigerant pipe, the drain pipe, and the electrical wire, together with a bundled pipe simultaneously sleeving all three, to facilitate connection. The housing 201 of the outdoor unit 200 or the indoor unit is provided with the installation hole 220, and the flexible connection member passes through the installation hole 220 to connect the indoor unit and the outdoor unit 200. However, the housing 201 of the outdoor unit 200 or the indoor unit has relatively high sealing requirements. If no seal structure 100 is provided between the flexible connection member and the installation hole 220, dust, mosquitoes, rodents and the like may enter the air conditioner through the gap between the installation hole 220 and the flexible connection member, and are difficult to remove. In particular, for the outdoor unit 200, since it is installed outdoors, the installation environment is more complicated and harsher, and therefore the requirements for dustproofing, waterproofing, rodent prevention and insect prevention are correspondingly higher. If mosquitoes or insects enter the outdoor unit 200 and affect normal operation thereof, the user must remove the outdoor unit from the outside in order to clean it, which is inconvenient. For convenience of description, a case in which the seal structure 100 is provided at the outdoor unit 200 is described as an example below.

To ensure the sealing performance of the air conditioner, the flexible seal sleeve 110 is provided. The flexible seal sleeve 110 is sleeved at the sleeve pipe 210, and one end of the flexible seal sleeve 110 close to the installation hole 220 is provided with the first connection portion 120 to be sealingly connected to the installation hole 220, thereby mounting one end of the flexible seal sleeve 110 and sealing the installation hole 220. The end of the flexible seal sleeve 110 away from the installation hole 220 is provided with the second connection portion 130 to be sealingly connected to the outer surface of the sleeve pipe 210, thereby mounting the other end of the flexible seal sleeve 110 and sealing the gap between the installation hole 220 and the flexible connection member. Compared with directly providing a seal ring 139 or another sealing member at the peripheral edge of the installation hole 220, in this solution, the seal structure 100 is fixed respectively to the peripheral edge of the installation hole 220 and the outer peripheral edge of the sleeve pipe 210, thereby ensuring both sealing effect and installation stability. Moreover, when the flexible connection member twists, the flexible seal sleeve 110 can twist therewith, such that the gap between the flexible seal sleeve 110 and the installation hole 220 and the gap between the seal structure 100 and the sleeve pipe 210 do not increase, thereby further ensuring the sealing effect.

The seal structure 100 is at least partially located outside the housing 201. That is, the seal structure 100 may be entirely located outside the housing 201, i.e. both the end of the flexible seal sleeve 110 close to the installation hole 220 and the first connection portion 120 are connected and fixed to an outer side of the housing 201. The seal structure 100 may also be partially located outside the housing 201, i.e. the end of the flexible seal sleeve 110 close to the installation hole 220 and/or the first connection portion 120 passes through the installation hole 220 and is connected and fixed to an inner side of the housing 201. In actual installation, the flexible seal sleeve 110, the first connection portion 120, and the second connection portion 130 may first be correspondingly sleeved at the flexible connection member or the installation hole 220, and after installation of components inside the outdoor unit 200 is completed, the seal structure 100 is then installed, to facilitate adjustment of the length of the flexible connection member extending out of the housing 201. However, if the seal structure 100 is installed on the inner side of the housing 201, and the installation of the seal structure 100 is carried out after the installation of the internal components of the outdoor unit 200 is completed, installation of the seal structure 100 becomes very inconvenient due to the limitation of the installation space for the internal components. If the seal structure 100 is installed before the internal components of the outdoor unit 200 are installed, then it is inconvenient to adjust the length of the flexible connection member extending out of the housing 201.

In the technical solution of the present application, the flexible seal sleeve 110 is sleeved at the flexible connection member. The flexible connection member includes the sleeve pipe 210 and the flexible refrigerant pipe provided in the sleeve pipe 210, and the housing 201 of the outdoor unit 200 or the indoor unit is provided with the installation hole 220 for the sleeve pipe 210 to pass through to connect the outdoor unit 200 and the indoor unit. One end of the flexible seal sleeve 110 close to the installation hole 220 is provided with the first connection portion 120 to be sealingly connected to the installation hole 220, thereby mounting one end of the flexible seal sleeve 110 and sealing the installation hole 220. The end of the flexible seal sleeve 110 away from the installation hole 220 is provided with the second connection portion 130 to be sealingly connected to the outer surface of the sleeve pipe 210, thereby mounting the other end of the flexible seal sleeve 110 and sealing the gap between the installation hole 220 and the flexible connection member. Compared with directly providing a seal ring 139 or another sealing member at the peripheral edge of the installation hole 220, in this solution, the seal structure 100 is fixed respectively to the peripheral edge of the installation hole 220 and the outer peripheral edge of the sleeve pipe 210, thereby ensuring both sealing effect and installation stability. Moreover, when the flexible connection member twists, the flexible seal sleeve 110 can twist therewith, such that the gap between the flexible seal sleeve 110 and the installation hole 220 and the gap between the seal structure 100 and the sleeve pipe 210 do not increase, thereby further ensuring the sealing effect.

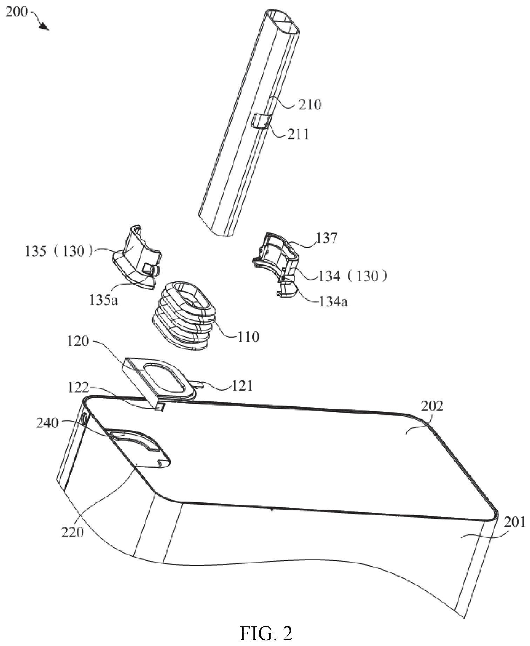

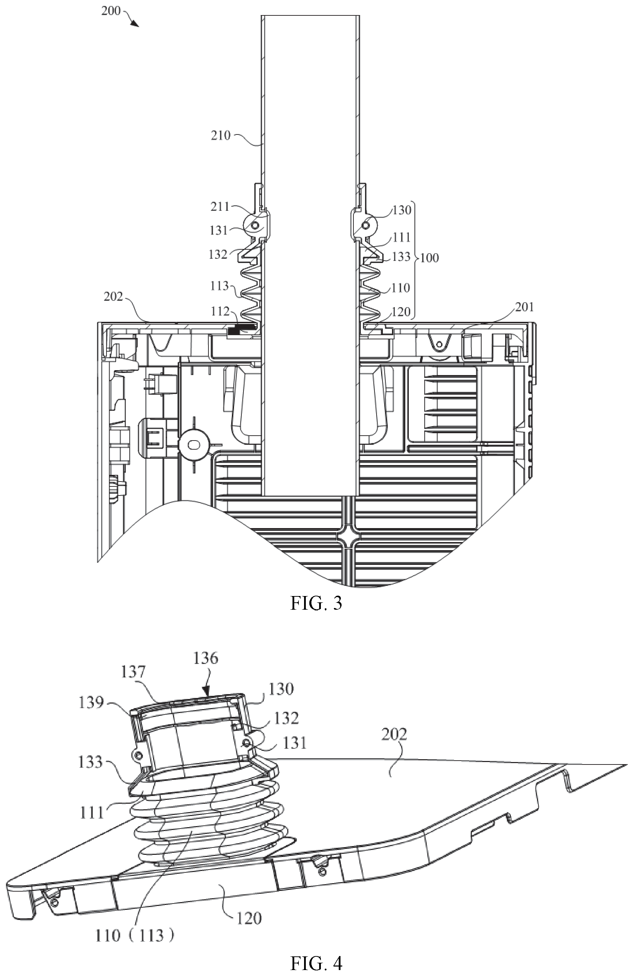

Referring to FIGS. 2 and 3, in an embodiment, an inner side wall of the second connection portion 130 is provided with a limit protrusion 131. An outer wall of the sleeve pipe 210 is provided with a limit groove 211, and the limit protrusion 131 is snap-fitted into the limit groove 211. Specifically, the flexible seal sleeve 110 is connected to the second connection portion 130, preferably without a gap therebetween, thereby effectively ensuring overall sealing between the flexible seal sleeve 110 and the second connection portion 130. The flexible seal sleeve 110 is configured as a flexible structure, thereby facilitating bending of the seal structure 100 together with twisting of the sleeve pipe 210 and ensuring connection stability of the seal structure 100. In order to ensure installation of the seal structure 100 and the sleeve pipe 210, the inner side wall of the second connection portion 130 is provided with the limit protrusion 131, and correspondingly the outer wall of the sleeve pipe 210 is provided with the limit groove 211. When the second connection portion 130 is sleeved at the sleeve pipe 210, the limit protrusion 131 is snap-fitted into the limit groove 211, to limit the axial movement of the second connection portion 130 relative to the sleeve pipe 210, ensuring the installation of the seal structure 100 and the sleeve pipe 210.

In an embodiment, an end of the limit protrusion 131 away from the inner side wall is provided with an engaging protrusion 132 protruding laterally. When the limit protrusion 131 is snap-fitted into the limit groove 211, the engaging protrusion 132 is inserted into the sleeve pipe 210 and abutted against an inner wall of the sleeve pipe 210. Specifically, the engaging protrusion 132 protrudes laterally from the limit protrusion 131, i.e. the engaging protrusion 132 protrudes in an axial direction of the sleeve pipe 210. In this solution, the sleeve pipe 210 is configured as a thin-walled pipe, and the flexible refrigerant pipe and/or the drain pipe and/or the electrical wire passes through the sleeve pipe 210. Therefore, the limit groove 211 passes through the wall of the sleeve pipe 210. In this case, there is no need to additionally provide an engaging groove corresponding to the limit protrusion 131. When the limit protrusion 131 is inserted into the limit groove 211, part of the limit protrusion 131 extends into the internal space of the sleeve pipe 210, and correspondingly the engaging protrusion 132 directly is abutted against the inner wall of the sleeve pipe 210, thereby facilitating processing of the limit groove 211 and reducing the possibility of displacement of the second connection portion 130 relative to the sleeve pipe 210, further limiting axial movement of the second connection portion 130 relative to the sleeve pipe 210, and ensuring installation of the seal structure 100 and the sleeve pipe 210.

In other embodiments, the limit groove 211 is formed only in the outer wall of the sleeve pipe 210, i.e. the limit groove 211 does not communicate with the internal space of the sleeve pipe 210. In this case, a side wall of the limit groove 211 is provided with an engaging groove corresponding to the limit protrusion 131, and the engaging groove communicates with the limit groove 211. When the limit protrusion 131 is inserted into the limit groove 211, the engaging protrusion 132 is correspondingly inserted into the engaging groove.

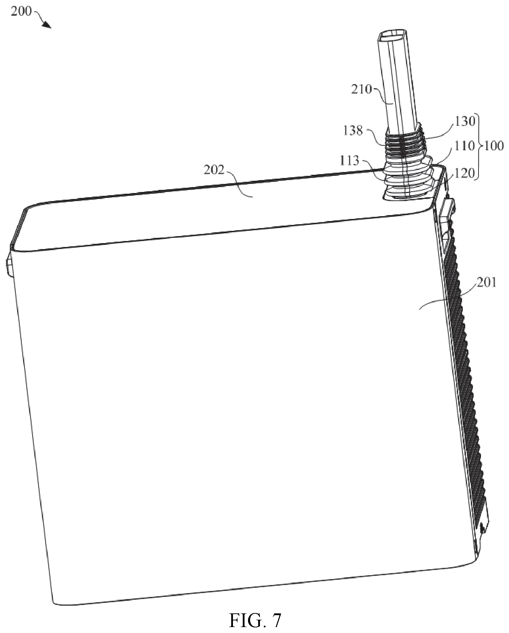

Referring to FIGS. 7 to 9, in an embodiment, the flexible seal sleeve 110 and the second connection portion 130 are integrally formed. Specifically, the flexible seal sleeve 110 and the second connection portion 130 are integrally formed, thereby further ensuring sealing between the flexible seal sleeve 110 and the second connection portion 130. Since the flexible seal sleeve 110 is configured as a flexible structure, the second connection portion 130 is correspondingly also a flexible structure. To improve the strength of the second connection portion 130 and improve the installation stability of the second connection portion 130 on the sleeve pipe 210, the second connection portion 130 is provided with a plurality of reinforcing ribs 138 connected in a staggered manner, which on the one hand increase the overall thickness of the second connection portion 130 and on the other hand improve the structural strength of the second connection portion 130, thereby ensuring the installation stability of the second connection portion 130 and the sleeve pipe 210. The fastener is configured as a fastening screw or fastening bolt.

In another embodiment, referring to FIGS. 1 to 6, the flexible seal sleeve 110 and the second connection portion 130 are separately formed. In order to ensure a sealed connection between the second connection portion 130 and the flexible seal sleeve 110, one of the second connection portion 130 and the flexible seal sleeve 110 is provided with a seal ring groove 133, and the other one of the second connection portion 130 and the flexible seal sleeve 110 is provided with an annular seal portion 111. The annular seal portion 111 is inserted into the seal ring groove 133.

The seal ring groove 133 may be provided at an inner peripheral edge of the second connection portion 130, and correspondingly the annular seal portion 111 is provided at an outer peripheral edge of the flexible seal sleeve 110. Alternatively, the seal ring groove 133 may be provided at an inner peripheral edge of the flexible seal sleeve 110, and correspondingly the annular seal portion 111 is provided at an outer peripheral edge of the second connection portion 130. The seal ring groove 133 surrounds the peripheral edge of the annular seal portion 111, which can reduce the installation gap between the second connection portion 130 and the flexible seal sleeve 110 and increase the connection path between the second connection portion 130 and the flexible seal sleeve 110, thereby further improving the sealing effect between the second connection portion 130 and the flexible seal sleeve 110. In an embodiment, the seal ring groove 133 and the annular seal portion 111 are in interference fit.

To further facilitate installation of the second connection portion 130, in an embodiment, referring to FIGS. 2 and 3, the second connection portion 130 includes a first fixing portion 134 and a second fixing portion 135 that are spliced together, and the limit protrusion 131 is located at the splice between the first fixing portion 134 and the second fixing portion 135.

Since the flexible seal sleeve 110 and the second connection portion 130 are separately formed, in order to ensure the installation stability of the second connection portion 130 on the sleeve pipe 210, the second connection portion 130 may be formed by splicing the first fixing portion 134 and the second fixing portion 135, and both the first fixing portion 134 and the second fixing portion 135 are semi-annular structures. The limit protrusion 131 is located at the splice between the first fixing portion 134 and the second fixing portion 135. During actual installation, the splicing of the first fixing portion 134 and the second fixing portion 135 is completed while the limit protrusion 131 is inserted, thereby facilitating installation of the second connection portion 130. At this time, the second connection portion 130 may be configured as a rigid plastic tube or as a rubber tube or the like.

In an embodiment, the first fixing portion 134 is provided with a first through hole 134a, the second fixing portion 135 is provided with a second through hole 135a, and a fastener passes through the first through hole 134a and is fastened to the second through hole 135a so as to connect the first fixing portion 134 and the second fixing portion 135. Specifically, in order to further fix the first fixing portion 134 and the second fixing portion 135, the outer periphery of the first fixing portion 134 is provided with the first through hole 134a, and correspondingly the outer periphery of the second fixing portion 135 is provided with the second through hole 135a. The fastener passes through the first through hole 134a and is fastened to the second through hole 135a, thereby further fixing the first fixing portion 134 and the second fixing portion 135. In other embodiments, the first fixing portion 134 and the second fixing portion 135 may also be fixed by bonding or snap-fitting.

To further improve the sealing effect between the sleeve pipe 210 and the second connection portion 130, in an embodiment, referring to FIGS. 2 and 4, the second connection portion 130 is provided with an opening 136 away from the flexible seal sleeve 110, and a seal ring 139 is provided between an inner wall of the opening 136 and the sleeve pipe 210. Specifically, the seal ring 139 is fixed to an inner peripheral edge of the opening 136, thereby further sealing the outer periphery of the second connection portion 130 and reducing the possibility of dust, rainwater, mosquitoes and the like accidentally entering the second connection portion 130. The seal ring 139 may be sealing foam, sealing rubber, or the like.

In an embodiment, an inner wall of the second connection portion 130 is provided with an arcuate locking portion 137 protruding inwardly. The arcuate locking portion 137 protrudes toward an inner side of the second connection portion 130 to further press against the sleeve pipe 210, thereby increasing friction between the inner wall of the second connection portion 130 and the arcuate locking portion 137, and locking the sleeve pipe 210. In other embodiments, the arcuate locking portion may also be an inwardly protruding triangular segment or the like.

To facilitate bending of the seal structure 100 together with twisting of the sleeve pipe 210 and ensure connection stability of the seal structure 100, in an embodiment, the flexible seal sleeve 110 is configured as a corrugated pipe 113. The corrugated pipe 113 may be provided at a plurality of connecting segments of the flexible seal sleeve 110 that is bent and protrudes outwardly, i.e. a cross-section of the flexible seal sleeve 110 along its axial direction is substantially wave-shaped, such that the flexible seal sleeve 110 is better able to adapt to the torsional arc bending of the sleeve pipe 210, thereby ensuring the connection stability of the seal structure 100. In other embodiments, the corrugated pipe 113 may also be configured as a serpentine pipe formed by spirally winding a strip-shaped structure.

Referring again to FIGS. 1 to 9, to ensure connection between the first connection portion 120 and the edge of the installation hole 220, in an embodiment, an outer edge of the first connection portion 120 is snap-fitted to a peripheral edge of the installation hole 220, and an inner peripheral edge of the first connection portion 120 allows the sleeve pipe 210 to pass through and is connected to the flexible seal sleeve 110.

To facilitate passage of the sleeve pipe 210, a diameter of the installation hole 220 is greater than the diameter of the sleeve pipe 210, which easily results in an excessive gap between the installation hole 220 and the sleeve pipe 210. Therefore, the first connection portion 120 is provided. The outer edge of the first connection portion 120 is snap-fitted to the peripheral edge of the installation hole 220, and the inner peripheral edge of the first connection portion 120 allows the sleeve pipe 210 to pass through and is connected to the flexible seal sleeve 110, thereby facilitating installation of the flexible seal sleeve 110 and improving the sealing effect.

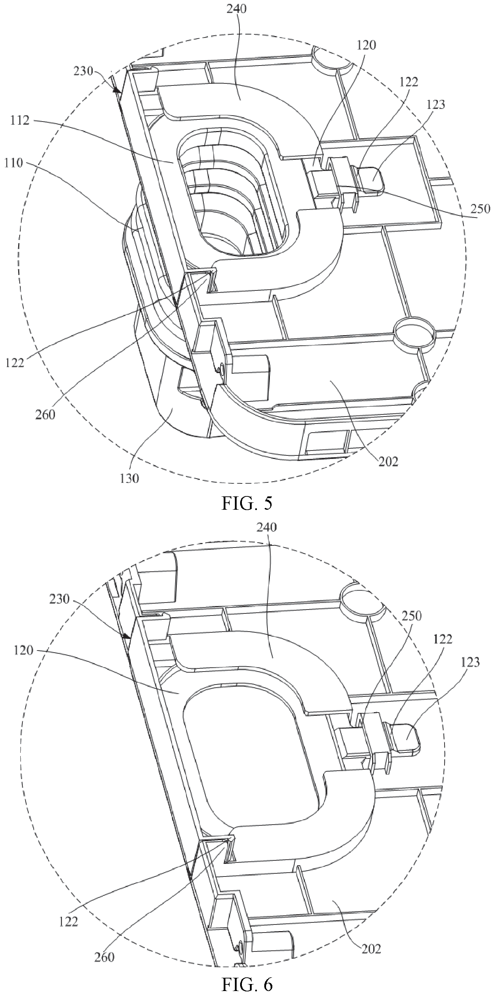

To ensure a sealed connection between the flexible seal sleeve 110 and the first connection portion 120, in an embodiment, referring to FIGS. 5 and 6, an end of the flexible seal sleeve 110 away from the second connection portion 130 is annularly provided with a seal flange 112, and the seal flange 112 is abutted against a side, facing the interior of the housing 201, of the inner peripheral edge of the first connection portion 120. Specifically, since the flexible seal sleeve 110 is configured as a flexible structure, the seal flange 112 is correspondingly also configured as a flexible portion, such that the seal flange 112 can tightly abut against the inner peripheral edge of the first connection portion 120, thereby achieving the sealing effect. During actual installation, the flexibility of the flexible seal sleeve 110 may be used to directly insert the end of the flexible seal sleeve 110 close to the installation hole 220 into an inner ring of the first connection portion 120 and then pull the flexible seal sleeve 110 in a reverse direction, such that the seal flange 112 tightly is abutted against the inner peripheral edge of the first connection portion 120. Installation is thus convenient.

To facilitate installation of the first connection portion 120, in an embodiment, one side of the housing 201 is provided with an insertion opening 230, and an inner edge of the installation hole 220 is provided with an engaging groove 240. The first connection portion 120 is inserted into the housing 201 through the insertion opening 230, and an outer edge of the first connection portion 120 is inserted into the engaging groove 240. Specifically, in this embodiment, the installation hole 220 is provided in the upper cover 202 of the housing 201, and the installation hole 220 is provided at an edge of the upper cover 202. Therefore, an edge of the upper cover 202 close to the installation hole 220 is provided with the insertion opening 230, and the first connection portion 120 is inserted into the housing 201 through the insertion opening 230 and is snap-fitted to an edge of the installation hole 220 facing the interior of the housing 201. To fix the first connection portion 120, the inner edge of the installation hole 220 is provided with the engaging groove 240. The engaging groove 240 may be provided on a side away from the insertion opening 230, and the outer edge of the first connection portion 120 is inserted into the engaging groove 240, thereby mounting the first installation portion on an inner side of the inner shell and facilitating installation of the first installation portion. Moreover, the engaging groove 240 can press the outer peripheral edge of the first installation portion to fit the inner peripheral edge of the installation hole 220, such that the first installation portion and the housing 201 are tightly pressed together, reducing the possibility of dust, mosquitoes, rodents and the like entering the housing 201 and ensuring the sealing performance of the seal structure 100.

In an embodiment, referring again to FIGS. 5 and 6, a side of the housing 201 away from the insertion opening 230 is formed with an engaging hole 250, and an edge of the insertion opening 230 forms a first engaging portion 260. The first connection portion 120 is provided with a second engaging portion 121, and the second engaging portion 121 passes through the engaging hole 250 and engages with an edge of the engaging hole 250.

The first connection portion 120 is further provided with a third engaging portion 122, and the third engaging portion 122 engages with the first engaging portion 260.

To further ensure fixation of the first connection portion 120, the first connection portion 120 is provided with a snap plate 123 extending in a direction away from the insertion opening 230, and the second engaging portion 121 is provided at the snap plate 123. When the outer edge of the one connecting portion is inserted into the engaging groove 240, the snap plate 123 is correspondingly inserted into the engaging hole 250 and engages with the edge of the engaging hole 250, thereby preventing the first connection portion 120 from disengaging from the insertion opening 230. Further, the edge of the insertion opening 230 forms the first engaging portion 260, and the first connection portion 120 is correspondingly provided with the third engaging portion 122. The third engaging portion 122 engages with the first engaging portion 260, such that while the second engaging portion 121 engages with the edge of the engaging hole 250, the third engaging portion 122 engages with the first engaging portion 260, thereby fixing the first connection portion 120 on the housing 201 and improving the installation stability of the first connection portion 120.

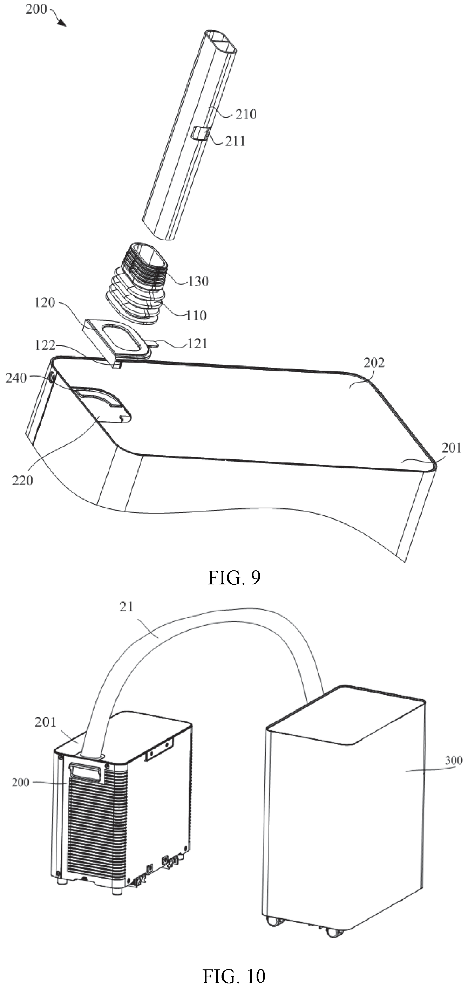

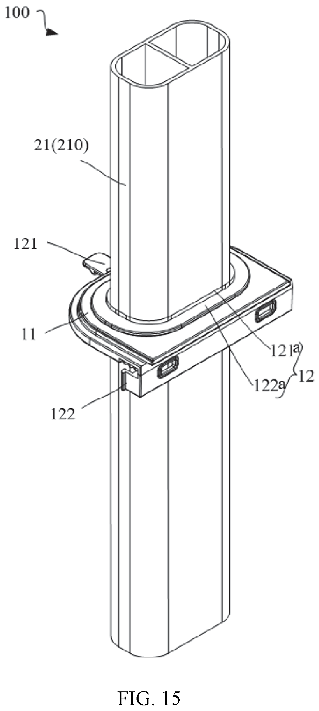

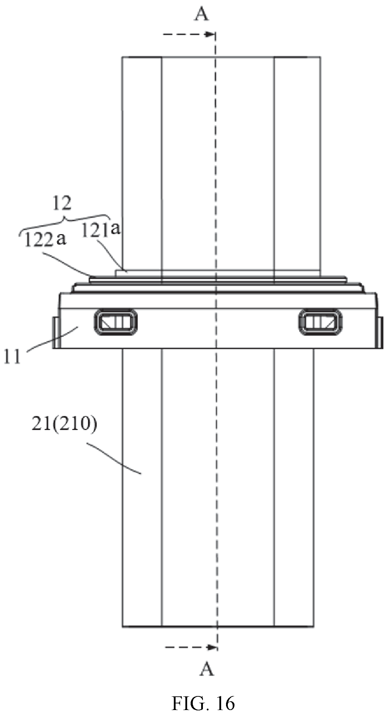

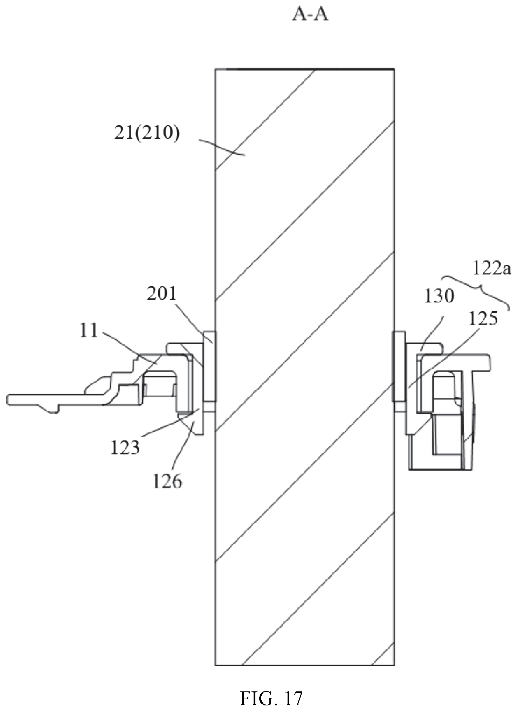

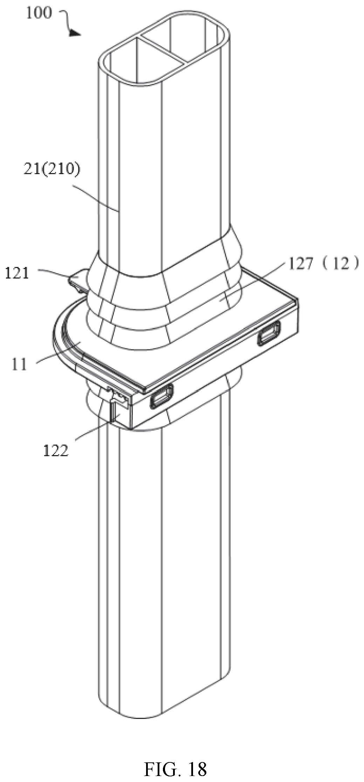

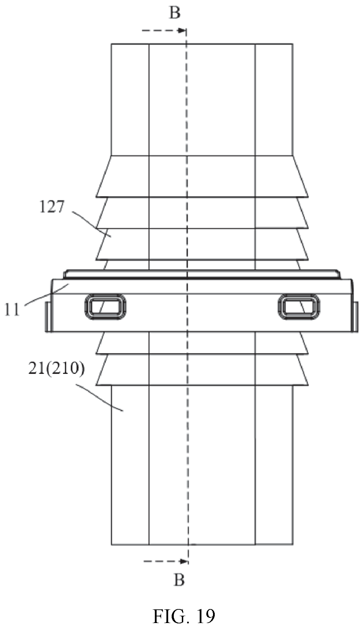

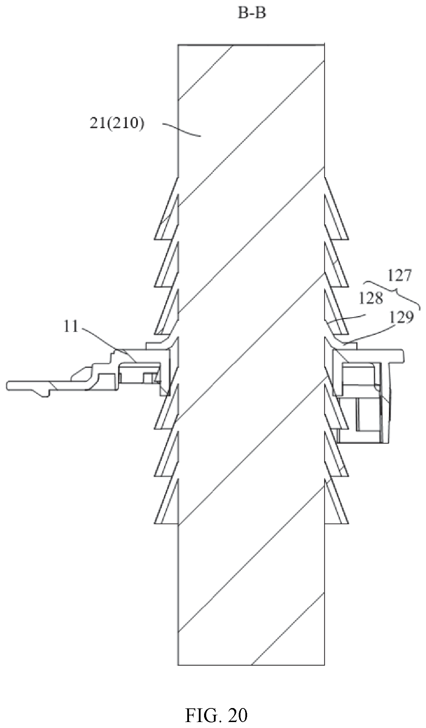

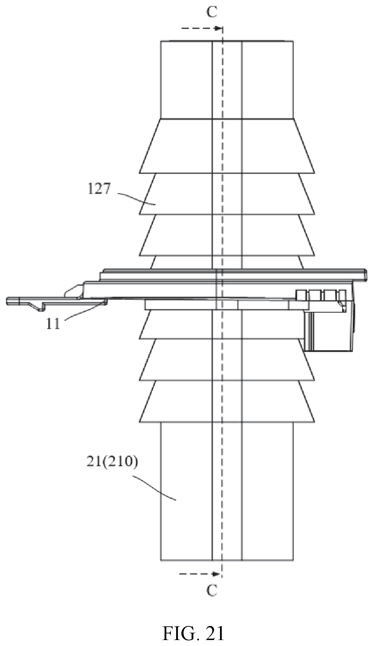

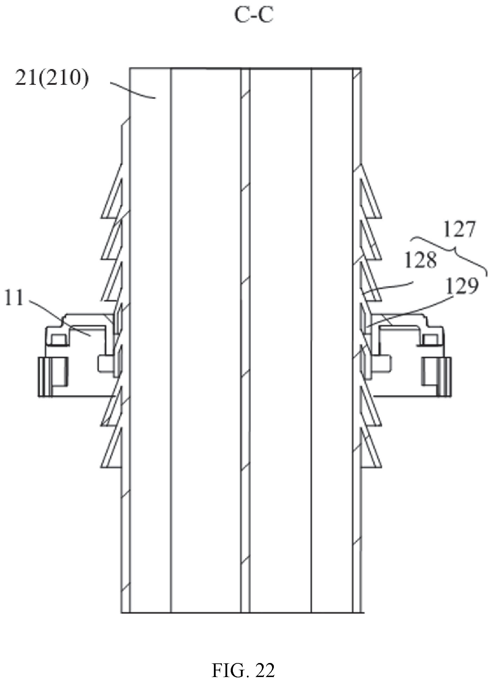

In addition, on the other hand, FIGS. 10 to 22 are schematic views of seal structures and air conditioners according to other embodiments of the present application.

In these embodiments of the present application, a seal structure 100 is further provided for an air conditioner. The air conditioner includes an outdoor unit 200, an indoor unit 300, and a flexible connection member 21 connecting the outdoor unit 200 and the indoor unit 300. A housing 201 of the outdoor unit 200 or the indoor unit 300 is provided with an installation hole 220 for the flexible connection member 21 to pass through.

Referring to FIGS. 10 to 18, in an embodiment of the present application, the seal structure 100 includes: a seal fixing structure 12 surrounding an outer periphery of the flexible connection member 21; and an installation structure, an outer periphery of the installation structure is fixed to an edge of the installation hole 220, and an interior of the installation structure allows the flexible connection member 21 to pass through.

In an embodiment, the installation structure is an installation fixing ring 11. An outer ring of the installation fixing ring 11 is fixed to the edge of the installation hole 220, and an inner ring of the installation fixing ring 11 allows the flexible connection member 21 to pass through. The seal fixing structure 12 is annularly arranged between the outer periphery of the flexible connection member 21 and the inner ring of the installation fixing ring 11, so that the flexible connection member 21 and the installation fixing ring 11 are sealingly connected.

Referring to FIG. 10, the air conditioner includes an outdoor unit 200 and an indoor unit 300. The flexible connection member 21 is respectively connected to the indoor unit 300 and the outdoor unit 200. The flexible connection member 21 may be a flexible refrigerant pipe and a sleeve pipe 210 sleeving the flexible refrigerant pipe; may also be a drain pipe and a sleeve pipe 210 sleeving the drain pipe; or an electrical wire and a sleeve pipe 210 sleeving the electrical wire. It may also include any two of the refrigerant pipe, the drain pipe, and the electrical wire, together with a sleeve pipe 210 simultaneously sleeving the two; or may include the refrigerant pipe, the drain pipe, and the electrical wire, together with a sleeve pipe 210 simultaneously sleeving all three, to facilitate connection. The housing 201 of the outdoor unit 200 or the indoor unit 300 is provided with the installation hole 220, and the flexible connection member 21 passes through the installation hole 220 to connect the indoor unit 300 and the outdoor unit 200. However, the housing 201 of the outdoor unit 200 or the indoor unit 300 has relatively high sealing requirements. If no seal structure 100 is provided between the flexible connection member 21 and the installation hole 220, dust, mosquitoes, rodents and the like may enter the air conditioner through the gap between the installation hole 220 and the flexible connection member 21, and are difficult to remove. In particular, for the outdoor unit 200, since it is installed outdoors, the installation environment is more complicated and harsher, and therefore the requirements for dustproofing, waterproofing, rodent prevention and insect prevention are correspondingly higher. If mosquitoes or insects enter the outdoor unit 200 and affect normal operation thereof, the user must remove at least part of the housing from the outside in order to clean it, which is inconvenient. For convenience of description, a case in which the seal structure 100 is provided at the outdoor unit 200 is described as an example below.

To ensure the sealing performance of the air conditioner, the seal fixing structure 12 is provided. The seal fixing structure 12 is sleeved at the outer periphery of the flexible connection member 21. To ensure fixation of the seal fixing structure 12, the installation hole 220 is further provided with the installation fixing ring 11. The outer ring of the installation fixing ring 11 is fixed to the edge of the installation hole 220, and the inner ring of the installation fixing ring 11 allows the flexible connection member 21 to pass through. The seal fixing structure 12 is annularly provided between the outer periphery of the flexible connection member 21 and the inner ring of the installation fixing ring 11. Therefore, an inner periphery of the seal fixing structure 12 is sealingly connected to the flexible connection member 21, and an outer periphery of the seal fixing structure 12 is sealingly connected to the installation fixing ring 11, thereby sealing the gap between the installation hole 220 and the flexible connection member 21 and achieving a sealed connection between the flexible connection member 21 and the installation fixing ring 11. Compared with directly providing the seal fixing structure 12 at the peripheral edge of the installation hole 220, this solution not only facilitates formation of the installation hole 220, but also facilitates installation of the seal fixing structure 12, thereby ensuring both sealing effect and installation stability. Moreover, when the flexible connection member 21 twists, the seal fixing structure 12 can twist therewith, such that the gap between the seal fixing structure 12 and the installation fixing ring 11 and the gap between the seal fixing structure 12 and the flexible connection member 21 do not increase, thereby further ensuring the sealing effect.

To ensure the sealing effect of the seal fixing structure 12 and facilitate installation of the seal fixing structure 12, an inner periphery of the seal fixing structure 12 may be directly fixed to the flexible connection member 21, and correspondingly an outer periphery of the seal fixing structure 12 is in sealed fit with an inner periphery of the installation fixing ring 11. Alternatively, an outer periphery of the seal fixing structure 12 may be directly connected to an inner periphery of the installation fixing ring 11, and correspondingly an inner periphery of the seal fixing structure 12 is in sealed fit with an outer periphery of the flexible connection member 21. That is, one end of the seal fixing structure 12 is configured as a fixed end and the other end of the seal fixing structure 12 is configured as a free end. Compared with a form in which both ends of the seal fixing structure 12 are free ends, this fixing form facilitates installation of the seal fixing structure 12 and helps reduce the number of parts, simplifying the seal structure 100. In other embodiments, both ends of the seal fixing structure 12 may also be free ends, i.e. the seal fixing structure 12 is respectively in sealed fit with the installation fixing ring 11 and the flexible connection member 21.

During actual installation of the seal fixing structure 12, the installation fixing ring 11 may first be fixed to the installation hole 220. Then, after installation of components inside the outdoor unit 200 is completed, the flexible connection member 21 is passed out through the inner ring of the installation fixing ring 11, and after a sealing position of the flexible connection member 21 is determined, sealing and fixing are performed by the seal fixing structure 12. Therefore, in an embodiment, the shape of the inner ring of the installation fixing ring 11 matches a sectional shape of the flexible connection member 21. For example, the two shapes are substantially the same, and an inner diameter of the inner ring of the installation fixing ring 11 is slightly greater than an outer diameter of the flexible connection member 21, thereby facilitating both passage of the flexible connection member 21 and installation of the seal fixing structure 12.

The seal structure 100 is at least partially located on the outer side of the housing 201. That is, the seal structure 100 may be entirely located on the outer side of the housing 201, i.e. both the installation fixing ring 11 and the seal fixing structure 12 are connected and fixed to the outer side of the housing 201. The seal structure 100 may also be partially located on the outer side of the housing 201. For example, the installation fixing ring 11 is fixed on an inner side of the installation hole 220, and the inner ring passes out of the installation hole 220, while the seal fixing structure 12 is provided outside the housing 201. Alternatively, the installation fixing ring 11 is fixed to the installation hole 220, one end of the seal fixing structure 12 passes through the installation hole 220 and is connected to the installation fixing ring 11, and the other end of the seal fixing structure 12 extends out of the housing 201, thereby facilitating fixation of the seal structure 100. Compared with the seal structure 100 being installed on the inner side of the housing 201, in this solution, the seal structure 100 is installed after installation of components inside the outdoor unit 200 is completed, and is therefore not limited by the installation space for internal components of the outdoor unit 200, so that installation is more convenient.

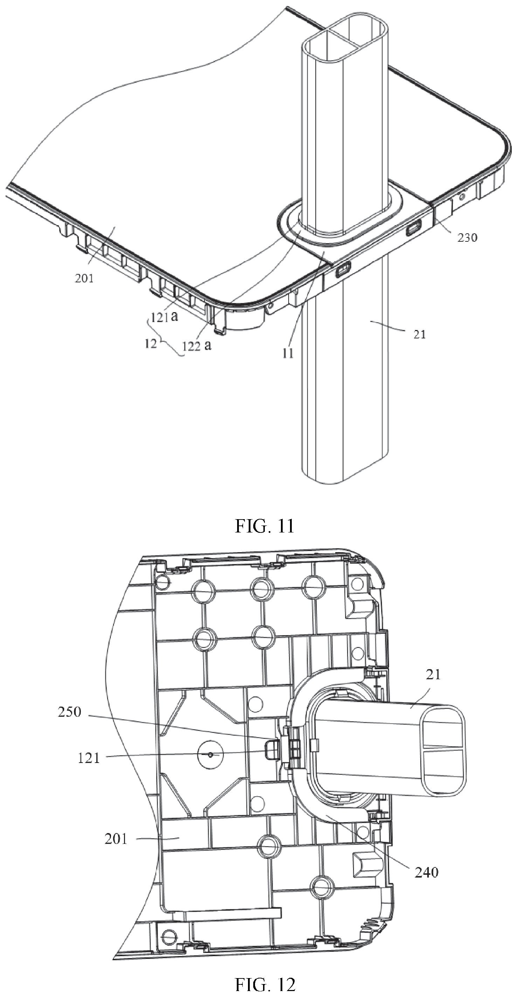

Referring to FIGS. 11 to 13, in the embodiments of the present application, the seal fixing structure 12 includes a seal fixing ring 121a. The seal fixing ring 121a is sealingly sleeved at the flexible connection member 21, and an outer periphery of the seal fixing ring 121a is fixedly connected to the inner ring of the installation fixing ring 11. Specifically, the seal fixing ring 121a is often configured as a flexible structure, such as a flexible seal ring or a flexible seal sleeve, such that when the seal fixing ring 121a is sleeved at the flexible connection member 21, sealing between the two can be achieved. Therefore, the seal fixing ring 121a and the flexible connection member 21 are often in interference fit. The outer periphery of the seal fixing ring 121a is fixedly connected to the inner ring of the installation fixing ring 11. The seal fixing ring 121a may be directly connected to the installation fixing ring 11, for example, directly bonded to the installation fixing ring 11, or in interference fit with the inner ring of the installation fixing ring 11, or integrally formed with the installation fixing ring 11, or indirectly connected to the installation fixing ring 11, thereby facilitating assembly of the seal fixing ring 121a.

When the seal fixing ring 121a is indirectly connected to the installation fixing ring 11, in the embodiments of the present application, the seal fixing structure 12 further includes an installation ring 122a. The installation ring 122a is fixedly sleeved at the seal fixing ring 121a and is detachably mounted to the inner ring of the installation fixing ring 11. Specifically, the installation ring 122a is fixedly sleeved at the seal fixing ring 121a, and the installation ring 122a is fixed to the inner ring of the installation fixing ring 11, i.e. the installation ring 122a is clamped between the seal fixing ring 121a and the installation fixing ring 11 to achieve installation of the seal fixing ring 121a on the installation fixing ring 11. The installation ring 122a is detachably mounted to the inner ring of the installation fixing ring 11. In actual installation, before assembly of the seal structure 100, the installation fixing ring 11 may first be fixed to the installation hole 220, and the seal fixing ring 121a and the installation ring 122a are jointly sleeved on a side of the flexible connection member 21 facing the outside of the housing 201. After installation of components inside the outdoor unit 200 is completed and a sealing position of the flexible connection member 21 is determined, the installation ring 122a is then detachably mounted to the inner ring of the installation fixing ring 11, thereby facilitating assembly of the seal structure 100. When it is necessary to adjust the sealing position of the flexible connection member 21, the installation ring 122a may be directly detached from the installation fixing ring 11, thereby facilitating adjustment of the sealing position of the flexible connection member 21. The seal fixing ring 121a may be bonded to the installation ring 122a, or may be integrally formed with the installation ring 122a.

In an embodiment, a circumferential side of the installation ring 122a is provided with a snap plate 123 extending in an axial direction of the installation ring 122a. The snap plate 123 is provided with a snap protrusion 126 facing the installation fixing ring 11, and the snap protrusion 126 engages with the inner ring of the installation fixing ring 11, i.e. the installation ring 122a is snap-fitted to the installation fixing ring 11, thereby facilitating attachment and detachment of the installation ring 122a. Compared with connection by a screw or another fastener, this solution can further reduce the number of parts of the seal structure 100. The snap protrusion 126 may directly engage with an edge of the inner ring of the installation fixing ring 11, such that there is no need to correspondingly provide an engaging portion on an inner periphery of the installation fixing ring 11, thereby facilitating processing of the installation fixing ring 11.

Referring again to FIGS. 11 to 13, in the embodiments of the present application, the installation ring 122a includes a first connection portion 120 and a second connection portion 130 connected by bending. The first connection portion 120 extends in an axial direction of the installation ring 122a and is snap-fitted to the inner ring of the installation fixing ring 11. The seal fixing ring 121a is fixed to the first connection portion 120. The second connection portion 130 extends in a radial direction of the installation ring 122a and overlaps an outer side of the installation fixing ring 11. Specifically, the first connection portion 120 extends in the axial direction of the installation ring 122a, such that the first connection portion 120 is abutted against the inner ring of the installation fixing ring 11. This not only facilitates the engagement of the two parts and increases their contact area and reduces the possibility of dust, water and the like penetrating between the first connection portion 120 and the installation fixing ring 11, thereby ensuring sealing between the installation ring 122a and the installation fixing ring 11. The second connection portion 130 extends in the radial direction of the installation ring 122a to overlap one side of the installation fixing ring 11, thereby further blocking a gap between the first connection portion 120 and the installation fixing ring 11. This further reduces the possibility of dust, water, mosquitoes and the like penetrating between the first connection portion 120 and the installation fixing ring 11. Moreover, the second connection portion 130 overlaps the outer side of the installation fixing ring 11, and correspondingly the snap plate 123 and the snap protrusion 126 are provided at an end of the first connection portion 120 away from the second connection portion 130, i.e. snap-fitted to an inner side of the installation fixing ring 11, thereby further facilitating installation of the installation ring 122a. In other embodiments, the snap protrusion 126 may also be directly provided at the first connection portion 120.

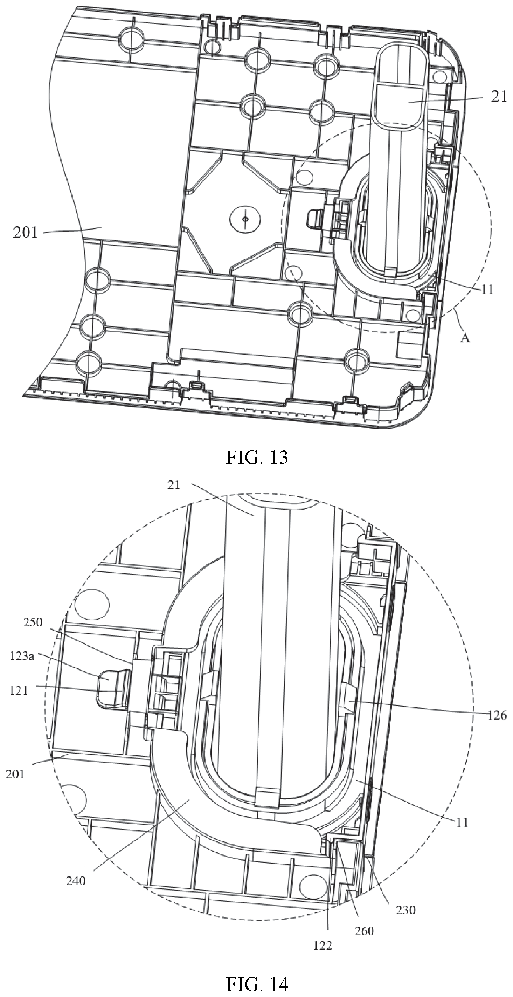

Referring to FIGS. 14 to 16, in the embodiments of the present application, the seal fixing structure 12 is configured as a seal skirt 127. A first end 128 of the seal skirt 127 is fixed to the flexible connection member 21, and a second end 129 of the seal skirt 127 extends in a direction away from the first end 128. An outer diameter of the seal skirt 127 increases in a direction away from the first end 128. An inner periphery of the second end 129 is pressed against an outer side of the installation fixing ring 11. Specifically, the first end 128 of the seal skirt 127 is fixed to the flexible connection member 21, and the second end 129 of the seal skirt 127 extends in a direction away from the first end 128. The outer diameter of the seal skirt 127 increases in a direction away from the first end 128, i.e. in a direction opposite to a direction in which the flexible connection member 21 passes out of the housing 201, the outer diameter of the seal skirt 127 is gradually enlarged. Therefore, the seal skirt 127 is configured as an umbrella-shaped structure, and the seal skirt 127 is a flexible structure, such that sealing between the flexible connection member 21 and the installation ring 122a is achieved by the clamping action between the seal skirt 127 and the inner ring of the installation fixing ring 11. In a first sealing state, for example when the flexible connection member 21 is relatively short and thus tension exists between the flexible connection member 21 and the outdoor unit 200, the inner periphery of the second end 129 is pressed against the outer side of the installation fixing ring 11, i.e. the seal skirt 127 blocks an outer side of the inner ring of the installation fixing ring 11, thereby ensuring sealed fixation between the flexible connection member 21 and the installation fixing ring 11. This sealing form further facilitates sealing of the seal structure 100 and reduces the number of parts of the seal structure 100.

Since the outer diameter of the seal skirt 127 is gradually enlarged in a direction opposite to a direction in which the flexible connection member 21 passes out of the housing 201, even if the flexible connection member 21 passes through the installation fixing ring 11 at the position of the seal skirt 127, the seal skirt 127 will not rupture or be damaged. In other embodiments, one end of the seal skirt 127 may also be fixed to the inner ring of the installation fixing ring 11, and the other end of the seal skirt 127 may be sealingly sleeved at the outer periphery of the flexible connection member 21.

Referring to FIGS. 14, 17 and 18, in another embodiment of the present application, the seal fixing structure 12 is configured as a seal skirt 127. A first end 128 of the seal skirt 127 is fixed to the flexible connection member 21, and a second end 129 of the seal skirt 127 extends in a direction away from the first end 128. An outer diameter of the seal skirt 127 increases in a direction away from the first end 128. The inner ring of the installation fixing ring 11 is clamped to an outer periphery of the second end 129. In a second sealing state, for example when the flexible connection member 21 is relatively short and thus tension exists between the flexible connection member 21 and the indoor unit 300, the inner ring of the installation fixing ring 11 is clamped to the outer periphery of the second end 129, i.e. the seal skirt 127 is engaged inside the installation fixing ring 11, thereby ensuring sealed fixation between the flexible connection member 21 and the installation fixing ring 11.

In an embodiment, the seal skirt 127 and the flexible connection member 21 are integrally formed, thereby ensuring the sealing effect at a connection portion between the seal skirt 127 and the flexible connection member 21 and reducing the number of parts of the seal structure 100.

To facilitate adjustment of the sealing position of the flexible connection member 21, in the embodiments of the present application, a plurality of seal skirt 127 are provided, and the plurality of seal skirts 127 are arranged at intervals in an axial direction of the flexible connection member 21. Two adjacent seal skirts 127 are provided to partially overlap. Specifically, the plurality of seal skirts 127 are arranged at intervals in the axial direction of the flexible connection member 21, thereby facilitating adjustment of the sealing position of the flexible connection member 21 by a user. In the first sealing state, one of the plurality of seal skirts 127 is pressed against the outer side of the installation fixing ring 11, and another seal skirt 127 adjacent to and close to the second end 129 of that seal skirt 127 may be clamped to the inner ring of the installation fixing ring 11. In the second sealing state, at least one of the plurality of seal skirts 127 is clamped to an inner periphery of the installation fixing ring 11, thereby further improving sealing strength of the seal skirt 127. Moreover, the distance between the plurality of seal skirts 127 should not be too small, and therefore two adjacent seal skirts 127 are provided to partially overlap.

In the embodiments of the present application, one side of the housing 201 is provided with the insertion opening 230, and an edge of the installation hole 220 is provided with the engaging groove 240. The installation fixing ring 11 is inserted into the housing 201 through the insertion opening 230, and an outer edge of the installation fixing ring 11 is inserted into the engaging groove 240. Specifically, in this embodiment, the installation hole 220 is provided in the upper cover of the housing 201, and the installation hole 220 is provided at an edge of the upper cover. Therefore, an edge of the upper cover close to the installation hole 220 is provided with the insertion opening 230, and the installation fixing ring 11 is inserted into the housing 201 through the insertion opening 230 and snap-fitted to an edge of the installation hole 220 facing the interior of the housing 201. To fix the installation fixing ring 11, the inner edge of the installation hole 220 is provided with the engaging groove 240. The engaging groove 240 may be provided on a side away from the insertion opening 230, and the outer edge of the installation fixing ring 11 is inserted into the engaging groove 240, thereby mounting the installation fixing ring 11 on an inner side of the inner shell and facilitating installation thereof. Moreover, the engaging groove 240 can press the outer peripheral edge of the installation fixing ring 11 to fit the inner peripheral edge of the installation hole 220, such that the installation fixing ring 11 and the housing 201 are tightly pressed together, reducing the possibility of dust, mosquitoes, rodents and the like entering the housing 201 and ensuring the sealing performance of the seal structure 100.

In an embodiment, a side of the housing 201 away from the insertion opening 230 is formed with an engaging hole 250, and an edge of the insertion opening 230 forms a first engaging portion 260. The installation fixing ring 11 is provided with a second engaging portion 121, the second engaging portion 121 passes through the engaging hole 250 and engages with an edge of the engaging hole 250.

The installation fixing ring 11 is further provided with a third engaging portion 122, and the third engaging portion 122 engages with the first engaging portion 260.

To further ensure fixation of the installation fixing ring 11, the installation fixing ring 11 is provided with a snap plate portion 123a extending in a direction away from the insertion opening 230, and the second engaging portion 121 is provided at the snap plate portion 123a. When the outer edge of the installation fixing ring 11 is inserted into the engaging groove 240, the snap plate portion 123a is correspondingly inserted into the engaging hole 250 and engages with the edge of the engaging hole 250, thereby preventing the installation fixing ring 11 from disengaging from the insertion opening 230. Further, the edge of the insertion opening 230 forms the first engaging portion 260, and the installation fixing ring 11 is correspondingly provided with the third engaging portion 122. The third engaging portion 122 engages with the first engaging portion 260, such that while the second engaging portion 121 engages with the edge of the engaging hole 250, the third engaging portion 122 engages with the first engaging portion 260, thereby fixing the installation fixing ring 11 on the housing 201 and improving the installation stability of the installation fixing ring 11.

The present application further provides an air conditioner including the seal structure 100. For the specific structure of the seal structure 100, reference may be made to the above embodiments. Since the air conditioner adopts all of the technical solutions of the above embodiments, it at least has all of the beneficial effects brought by the technical solutions of the above embodiments, and details thereof will not be repeated herein.

The above are merely some embodiments of the present application and are not intended to limit the scope of the present application. Under the inventive concept of the present application, any equivalent structural changes made by using the contents of the description and drawings of the present application, or any direct or indirect application in other related technical fields, shall fall within the scope of the present application.

## Claims

1. A seal structure, applied to an air conditioner, wherein:
the air conditioner comprises an outdoor unit, an indoor unit, and a flexible connection member connecting the outdoor unit and the indoor unit, wherein a housing of the outdoor unit or the indoor unit is provided with an installation hole for the sleeve pipe to pass through; and
the seal structure comprises:
a seal fixing structure surrounding an outer periphery of the flexible connection member; and
an installation structure, wherein an outer periphery of the installation structure is fixed to an edge of the installation hole, and an interior of the installation structure allows the flexible connection member to pass through.

2. The seal structure according to claim 1, wherein:
the flexible connection member comprises the sleeve pipe and a flexible refrigerant pipe provided in the sleeve pipe;
the seal fixing structure is a flexible seal sleeve sleeved at the sleeve pipe; and
the installation structure comprises:
a first connection portion provided at one end of the sealing sleeve and configured to be sealingly connected to the installation hole; and
a second connection portion provided at the other end of the sealing sleeve and configured to be sealingly connected to an outer surface of the sleeve pipe.

3. The seal structure according to claim 2, wherein an outer wall of the sleeve pipe is provided with a limit groove, and an inner side wall of the second connection portion is provided with a limit protrusion, wherein the limit protrusion is snap-fitted in the limit groove.

4. The seal structure according to claim 3, wherein an end of the limit protrusion away from the inner side wall is provided with an engaging protrusion protruding laterally, wherein when the limit protrusion is snap-fitted into the limit groove, the engaging protrusion is inserted into the sleeve pipe and abutted against an inner wall of the sleeve pipe.

5. The seal structure according to claim 2, wherein the flexible seal sleeve and the second connection portion are integrally formed.

6. The seal structure according to claim 2, wherein:
the flexible seal sleeve and the second connection portion are separately formed; and
one of the second connection portion and the flexible seal sleeve is provided with a seal ring groove, and the other one of the second connection portion and the flexible seal sleeve is provided with an annular seal portion, wherein the annular seal portion is inserted into the seal ring groove.

7. The seal structure according to claim 3, wherein the second connection portion comprises a first fixing portion and a second fixing portion spliced together, and the limit protrusion is located at a splicing between the first fixing portion and the second fixing portion.

8. The seal structure according to claim 7, wherein the first fixing portion is provided with a first through hole, the second fixing portion is provided with a second through hole, and a fastener passes through the first through hole and is fastened to the second through hole to connect the first fixing portion and the second fixing portion.

9. The seal structure according to claim 2, wherein an outer edge of the first connection portion is snap-fitted to a peripheral edge of the installation hole, and an inner peripheral edge of the first connection portion allows the sleeve pipe to pass through and is connected to the flexible seal sleeve.

10. The seal structure according to claim 9, wherein an end of the flexible seal sleeve away from the second connection portion is annularly provided with a seal flange, and the seal flange is abutted against a side, facing an interior of the housing, of the inner peripheral edge of the first connection portion.

11. The seal structure according to claim 2, wherein one side of the housing is provided with an insertion opening, and an inner edge of the installation hole is provided with an engaging groove, wherein the first connection portion is inserted into the housing through the insertion opening, and an outer edge of the first connection portion is inserted into the engaging groove.

12. The seal structure according to claim 11, wherein a side of the housing away from the insertion opening is formed with an engaging hole, and an edge of the insertion opening forms a first engaging portion, wherein:
the first connection portion is provided with a second engaging portion, and the second engaging portion passes through the engaging hole and engages with an edge of the engaging hole; and
the first connection portion is further provided with a third engaging portion, and the third engaging portion engages with the first engaging portion.

13. The seal structure according to claim 2, wherein:
the second connection portion is provided with an opening away from the flexible seal sleeve, and a seal ring is arranged between an inner wall of the opening and the flexible connection member; and/or
an inner wall of the second connection portion is provided with an arcuate locking portion protruding inwardly.

14. The seal structure according to any one of claims 2 to 13, wherein the flexible seal sleeve is configured as a corrugated pipe.

15. The seal structure according to claim 1, wherein:
the installation structure is an installation fixing ring, wherein an outer ring of the installation fixing ring is fixed to the edge of the installation hole, and an inner ring of the installation fixing ring allows the flexible connection member to pass through; and
the seal fixing structure is annularly provided between the outer periphery of the flexible connection member and the inner ring of the installation fixing ring, so that the flexible connection member is sealingly connected to the installation fixing ring.

16. The seal structure according to claim 15, wherein the seal fixing structure comprises a seal fixing ring, wherein the seal fixing ring is sealingly sleeved at the flexible connection member, and an outer periphery of the seal fixing ring is fixedly connected to the inner ring of the installation fixing ring.

17. The seal structure according to claim 16, wherein the seal fixing structure further comprises an installation ring, wherein the installation ring is fixedly sleeved at the seal fixing ring, and the installation ring is detachably mounted to the inner ring of the installation fixing ring.

18. The seal structure according to claim 17, wherein the installation ring comprises a first connection portion and a second connection portion connected by bending, wherein:
the first connection portion extends in an axial direction of the installation ring and is snap-fitted to the inner ring of the installation fixing ring, wherein the seal fixing ring is fixed to the first connection portion; and
the second connection portion extends in a radial direction of the installation ring and overlaps an outer side of the installation fixing ring.

19. The seal structure according to claim 17, wherein the installation ring is provided, in a circumferential direction thereof, with a snap plate extending in an axial direction of the installation ring, wherein the snap plate is provided with a snap protrusion facing the installation fixing ring, and the snap protrusion is engaged with the inner ring of the installation fixing ring.

20. The seal structure according to claim 15, wherein:
the seal fixing structure is configured as a seal skirt, wherein a first end of the seal skirt is fixed to the flexible connection member, a second end of the seal skirt extends in a direction away from the first end, and an outer diameter of the seal skirt increases in a direction away from the first end;
the inner ring of the installation fixing ring is clamped to an outer periphery of the second end; or
an inner periphery of the second end is pressed against an outer side of the installation fixing ring.

21. The seal structure according to claim 20, wherein the seal fixing structure is configured as a plurality of seal skirts, wherein:
the plurality of seal skirts are arranged at intervals in an axial direction of the flexible connection member; and two adjacent seal skirts are provided to partially overlap; and/or
the plurality of seal skirts and the flexible connection member are integrally formed.

22. The seal structure according to any one of claims 15 to 21, wherein one side of the housing is provided with an insertion opening, and an edge of the installation hole is provided with an engaging groove, wherein the installation fixing ring is inserted into the housing through the insertion opening, and an outer edge of the installation fixing ring is inserted into the engaging groove.

23. The seal structure according to claim 22, wherein a side of the housing away from the insertion opening is formed with an engaging hole, and an edge of the insertion opening forms a first engaging portion, wherein:
the installation fixing ring is provided with a second engaging portion, and the second engaging portion passes through the engaging hole and engages with an edge of the engaging hole; and
the installation fixing ring is further provided with a third engaging portion, and the third engaging portion engages with the first engaging portion.

24. An air conditioner, comprising the seal structure according to any one of claims 1 to 23.
